# EUROPÄISCHE PATENTANMELDUNG

(11) **EP 0 788 043 A2**
(43) Veröffentlichungstag der Anmeldung: **06.08.1997**
(21) Anmeldenummer: 97100640.8
(22) Anmeldetag: 16.01.1997
(51) Int. Cl.: G05B 19/418

(54) **Verfahren und Feldbussystem zur seriellen Datenübertragung in objektorientierten Anwendungen**

(30) Priorität: 30.01.1996 DE 19603296
(71) Anmelder: Weidmüller Interface GmbH & Co., D-32760 Detmold (DE)
(72) Erfinder: Sulzer, Erich, 69250 Schönau (DE); Täschner, Detlef, 59073 Hamm (DE); Bauerkämper, Dirk, 32791 Lage (DE)
(74) Vertreter: Urner, Peter, Dipl.-Phys.

(57) **Zusammenfassung**

Bei der seriellen Übertragung von Daten zwischen einer einen Adressraum (18, 19) aufweisenden zentralen Steuerelektronik (1) und dezentralen Funktionsgruppen (F1, ..., F8) mittels einer die Funktionsgruppen verbindenden Busleitung (B4), über die Datenwörter (A - H) gesendet werden und jeweils ein Datenwort (A - H) einer der Funktionsgruppen (F1, ..., F8) zugeordnet ist, wird für jede Funktionsgruppe (F1, ..., F8) Information über aktive (X) und passive ( 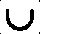 ) Bits sowie über deren Charakter (Eingabe/Ausgabe) pro Datenwort (A - H) gespeichert, wobei unter Verwendung dieser Information nur die aktiven Bits (X) pro Datenwort (A - H) gelesen und diese so im Adressraum (18, 19) gespeichert werden, daß zwischen den aktiven Bits (X) benachbarter Datenwörter keine freien Speicherplätze mehr verbleiben. Hierzu ist die Busleitung mit der zentralen Steuerelektronik (1) über einen Rangierverteiler (2) zur datengesteuerten Umgruppierung von Ein- und Ausgangsdaten verbunden.

## Beschreibung

Die Erfindung betrifft ein Verfahren gemäß der in Anspruch 1 beschriebenen Art sowie eine Vorrichtung gemäß Anspruch 8.

Es ist bereits das Feldbussystem Profibus DP allgemein bekannt, das sich zur seriellen, bidirektionalen Übertragung von Daten zwischen Sensoren und Aktoren einerseits und einem Automatisierungsgerät andererseits eignet. Zum Aufbau einer Automatisierungslösung unter Verwendung des Feldbussystems Profibus DP werden eine Anschaltelektronik für den Zugang des Automatisierungsgeräts zum Profibus sowie dezentrale Teilnehmer an der Busleitung zur Aufnahme bzw. Ausgabe von Feldsignalen benötigt. Im Protokoll des Feldbussystems Profibus DP werden systembedingt die Nutzdaten von oder für Slave-Teilnehmer immer mit einer Länge von einem oder mehreren Byte übertragen. Dabei werden innerhalb eines Bytes bei digitalen Werten die Informationen von maximal acht Sensoren (z. B. Schalterkontakte) oder Aktoren (z. B. Ventile) übertragen. Diese Daten werden im ebenfalls byteweise aufgebauten Adressraum des Automatisierungsgeräts abgelegt und über Anwenderprogramme weiterverarbeitet. Vor dem Hintergrund der byteweisen Arbeitsweise des Bussystems sind die dezentralen Teilnehmer bzw. Funktionsgruppen oft für den Anschluß von n x 8 Signalen, z. B. achtfach Digitaleingaben, sechzehnfach Digitalausgaben, usw., ausgebildet. Die Eigenart des Bussystems bestimmt dann den Aufbau von Automatisierungslösungen, wobei anlagenspezifische Gesichtspunkte untergeordnet werden.

Die Denkweise in Funktionsgruppen oder Objekten orientiert sich strikt an den Realitäten in der Anlage. Die Zergliederung einer Anlage in einzelne funktionale Einheiten (z. B. Antriebe, Heizungen. Ventile, usw.) entspricht dem Verständnis der Anwender, z. B. im Bereich der Projektierung, der Installation, der Inbetriebnahme, und dergleichen. Darin ist der Grund zu sehen, weshalb viele Betreiber von Anlagen objektorientierte Lösungen anstreben. An den zu automatisierenden Objekten ist die Anzahl der hier benötigten Sensoren und Aktoren aber eben nur objektabhängig, und man findet nur selten die vom Feldbussystem optimal unterstützte Achterteilung.

Der Einsatz des Feldbussystems Profibus hat daher in funktionsorientieren Speicheraufbauten zur Folge, daß speziell der byteweise aufgebaute Adressraum des Automatisierungsgeräts (zentrale Steuerelektronik) nur lückenhaft belegt wird. Neben den anwendungsrelevanten, tatsächlich benötigten Adressen finden sich je nach Applikation auch mehr oder weniger Adresspunkte, die ohne Informationsgehalt sind und aufgrund des Verfahrens nicht genutzt werden können.

Der Erfindung liegt die Aufgabe zugrunde, das eingangs genannte Verfahren und die eingangs genannte Vorrichtung so auszubilden, daß sich der Adressraum des Automatisierungsgeräts bzw. der zentralen Steuerelektronik besser ausnutzen läßt.

Eine verfahrensseitige Lösung der gestellten Aufgabe ist im kennzeichnenden Teil des Patentanspruchs 1 angegeben. Dagegen findet sich eine vorrichtungsseitige Lösung der gestellten Aufgabe im kennzeichnenden Teil des Patentanspruchs 8. Vorteilhafte Ausgestaltungen der Erfindung sind den jeweils nachgeordneten Unteransprüchen zu entnehmen.

Ein Verfahren nach der Erfindung zur seriellen Übertragung von Daten zwischen einer einen Adressraum aufweisenden zentralen Steuerelektronik und dezentralen Funktionsgruppen mittels einer die Funktionsgruppen verbindenden Busleitung, über die Datenwörter gesendet werden und jeweils ein Datenwort einer der Funktionsgruppen zugeordnet ist, zeichnet sich dadurch aus, daß für jede Funktionsgruppe Information über aktive und passive Bits pro Datenwort gespeichert wird, unter Verwendung dieser Information nur die aktiven Bits pro Datenwort gelesen und diese so im Adressraum gespeichert werden, daß zwischen den aktiven Bits benachbarter Datenwörter keine freien Speicherplätze mehr verbleiben. Dabei kann bezüglich der einzelnen Bits auch Information bezüglich deren Charakter (Ein-/Ausgabe) gespeichert werden.

Es ist somit möglich, den endlichen Adressraum der zentralen Steuerelektronik praktisch zu 100% mit relevanten Adressen zu belegen, also mit aktiven Bits, so daß sich im Gegensatz zum Stand der Technik ein erhöhter Ausnutzungsgrad des Adressraums ergibt.

Dabei ist der Adressraum üblicherweise in einen Adressraum für Eingänge und einen Adressraum für Ausgänge unterteilt. Nach einer Weiterbildung der Erfindung werden daher in den Adressraum für Eingänge die aktiven Bits derjenigen Datenwörter gespeichert, die von den Funktionsgruppen über die Busleitung zur zentralen Steuerelektronik gesendet werden.

Dagegen werden in den Adressraum für Ausgange die aktiven Bits derjenigen Datenwörter gespeichert, die von der zentralen Steuerelektronik über die Busleitung zu den Funktionsgruppen gesendet werden.

Beide Adressräume, also derjenige für Eingänge als auch derjenige für Ausgänge, können somit im wesentlichen dicht belegt werden, ohne daß zwischen den aktiven Bits der jeweiligen Datenwörter passive Bits verbleiben.

Dabei werden nach einer weiteren Ausgestaltung der Erfindung die aktiven Bits beim Aussenden aus dem Adressraum für Ausgänge in Richtung zu den Funktionsgruppen um die zugehörigen passiven Bits für das jeweilige Datenwort ergänzt, und zwar unter Verwendung der für jede Funktionsgruppe gespeicherten Information über aktive und passive Bits, so daß letztlich wieder vollständige Datenwörter über die Busleitung zu den Funktionsgruppen übertragen werden.

Als aktive Bits eines Datenworts werden diejenigen Bits bezeichnet, die tatsächlich für die Übertragung von Information vorgesehen sind. Ist das Datenwort z. B. acht Bit lang und enthält eine an der Busleitung liegende Funktionsgruppe acht Anschlüsse, von denen fünf belegt sind, so beträgt die Anzahl der aktiven Bits fünf, während die Anzahl der passiven Bits drei beträgt. Durch die aktiven Bits wird dann jeweils die Information 0 oder 1 übertragen. Würde dagegen die Funktionsgruppe nurvier Anschlüsse aufweisen, von denen zwei belegt sind, so würde die Anzahl der aktiven Bits zwei betragen und die Anzahl der passiven Bits sechs.

Eine weitere Unzulänglichkeit des herkömmlichen Feldbussystems Profibus DP ist es, daß einzelne Signale nicht frei rangiert werden können, sondern automaisch und unveränderbar in Abhängigkeit von der Stationsadresse im Adressraum abgelegt werden. Nach einer Ausgestaltung der Erfindung lassen sich jetzt aber auch zu unterschiedlichen Datenwörtern gehörende und vorbestimmte der gespeicherten aktiven Bits einzeln unter Wahrung ihrer Stationszugehörigkeit umplazieren und z. B. zu Gruppen zusammenfassen, so daß ein gewisses Nachrangieren möglich ist. Dabei lassen sich z. B. alle Adressen von Endschaltern einer Anlage hintereinander plazieren; der Adressraum kann somit übersichtlich strukturiert werden.

Eine Vorrichtung zur seriellen Übertragung von Daten zwischen einer einen Adressraum aufweisenden zentralen Steuerelektronik und dezentralen Funktionsgruppen mittels einer die Funktionsgruppen verbindenden Busleitung, über die Datenwörter gesendet werden und jeweils ein Datenwort einer der Funktionsgruppen zugeordnet ist, zeichnet sich dadurch aus, daß die Busleitung mit der zentralen Steuerelektronik über einen Rangierverteiler zur datengesteuerten Umgruppierung von Ein- und Ausgangsdaten verbunden ist.

Durch diesen neuen Rangierverteiler mit zugehörigem Software-Paket wurde das Problem der mangelnden Ausnutzung des Adressraums der zentralen Steuerelektronik bei strikt objektorientierten Feldbusanwendungen gelöst. Die Datenübertragung kann weiterhin gemäß Profibus-Norm erfolgen, so daß nach wie vor alle erhältlichen Profibus-Funktionsgruppen verwendet werden können. Bei der Definition von dezentralen Teilnehmern mittels der Software ist es nun möglich, aktive und nicht aktive bzw. passive, d. h. ungenutzte Signalpunkte zu unterscheiden und kenntlich zu machen. Erfordert z. B. eine Funktionsgruppe von einer Achtfach-Digitaleingabestation nur sechs real genutzte Eingänge, so werden die restlichen zwei vorhandenen Eingänge als passiv gekennzeichnet.

Nach derartiger Definition aller vorhandenen Profibus-Teilnehmer wird ein Rangierlauf gestartet, dessen Ergebnis die lückenlose Belegung des Adressraums der zentralen Steuerelektronik ist. Dadurch kann der Adressraum auch bei objektorientierten Feldbusapplikationen zu praktisch 100% genutzt werden.

Der Einsatz des Software-Rangierverteilers macht es zudem möglich, zur Prozeßseite hin flexible, objektorientierte Slave-Stationen einzusetzen. Es ist möglich, eine Slave-Anschaltung für ein relativ großes Profibus-Objekt mit z. B. 24 Dateneingängen und 24 Datenausgängen auf einem Trägermodul aufzubauen. Die Datenein- und Ausgänge sind parallel verdrahtet, so daß das Trägermodul 24 hardwaremäßig beschaltbare Informationspunkte aufweist. Jeder der Informationspunkte kann also als Ein- oder Ausgang beschaltet werden. Das Trägermodul wird dazu beliebig mit funktionsorientierten, steckbaren Eingangs- oder Ausgangsmodulen kombiniert. Die so aufgebaute reale Ein- und Ausgabekonfiguration wird entsprechend per Software definiert und als aktiv gekennzeichnet und wie oben beschrieben komprimiert im Adressraum der zentralen Steuerelektronik abgelegt. Im Gegensatz dazu würde ohne Einsatz des Software-Rangierverteilers der gesamte zum Profibus-Objekt korrespondierende Adressraum von drei Byte-Eingängen und drei Byte-Ausgängen belegt werden. Die reale Ein- und Ausgangskonfiguration bliebe unberücksichtigt.

Der Rangierverteiler nach der Erfindung enthält u. a. einen an der Adressraumseite liegenden ersten Speicher, einen an der Busleitungsseite liegenden zweiten Speicher sowie einen Rangierprozessor zur Datenumgruppierung. Kommen z. B. über die Busleitung Datenwörter von den Funktionsgruppen an, so gelangen diese Datenwörter zunächst in den zweiten Speicher, um dort zwischengespeichert zu werden. Sie werden dann gemäß Softwarevorgabe mittels des Rangierprozessors so umgruppiert und im ersten Speicher abgelegt, daß dort nur noch die aktiven Bits der aufeinanderfolgenden Datenwörter dicht nebeneinander liegen. Sodann erfolgt eine Übergabe dieser aktiven Bits aus dem ersten Speicher in den Eingangsadressraum der zentralen Steuerelektronik. Entsprechendes gilt für die Informationsübertragung in entgegengesetzter Richtung aus dem Ausgangsadressraum der zentralen Steuerelektronik hin zur Busleitung bzw. zu den Funktionsgruppen.

Dabei ist der Rangierprozessor vorzugsweise mit einem dritten Speicher verbunden, in welchem auf jede der Funktionsgruppen bezogene Information über aktive und passive Bits pro Datenwort gespeichert ist.

Auf diese Information muß der Rangierprozessor also zurückgreifen, wenn er zu entscheiden hat, welche Bits eines empfangenen Datenworts als aktiv und welche als passiv zu behandeln sind, oder wenn er umgekehrt zu entscheiden hat, welche aktiven Bits aus dem Ausgangsadressraum mit wievielen passiven Bits zu ergänzen sind, um ein Datenwort wieder zu einer Funktionsgruppe übertragen zu können.

Nach einer noch weiteren Ausgestaltung der Erfindung ist auch eine zentrale Prozessoreinheit der zentralen Steuerelektronik mit dem dritten Speicher verbunden, so daß auch sie unter Verwendung der im dritten Speicher abgelegten Information bezüglich der aktiven und passiven Bits eines Datenworts nur die aktiven Bits eines jeweiligen Datenworts in den Ausgangsadressraum der zentralen Steuerelektronik eingeben kann.

Der dritte Speicher läßt sich vorzugsweise mit einem Programmiergerät zur Eingabe von Information verbinden, insbesondere für den Transfer der jeder Funktionsgruppe zugeordneten Information über aktive und passive Bits pro Datenwort. Diese Information kann mittels des auf einem Programmiergerät installierten Softwarepakets manuell eingegeben werden und wird in einer Datenbank des Programmiergeräts gespeichert. Der Informationstransfer erfolgt dann wie oben beschrieben.

Die Erfindung wird nachfolgend unter Bezugnahme auf die Zeichnung näher beschrieben. Es zeigen:
**Figur 1** einen Feldbus-Systemaufbau mit integriertem Software-Rangierverteiler;
**Figur 2** den inneren Aufbau des Rangierverteilers; und
**Figur 3** ein detaillierteres Blockschaltbild zur Erläuterung des internen Aufbaus und des Zusammenwirkens der zentralen Steuerelektronik mit dem Software-Rangierverteiler und einem weiteren Informationsspeicher.

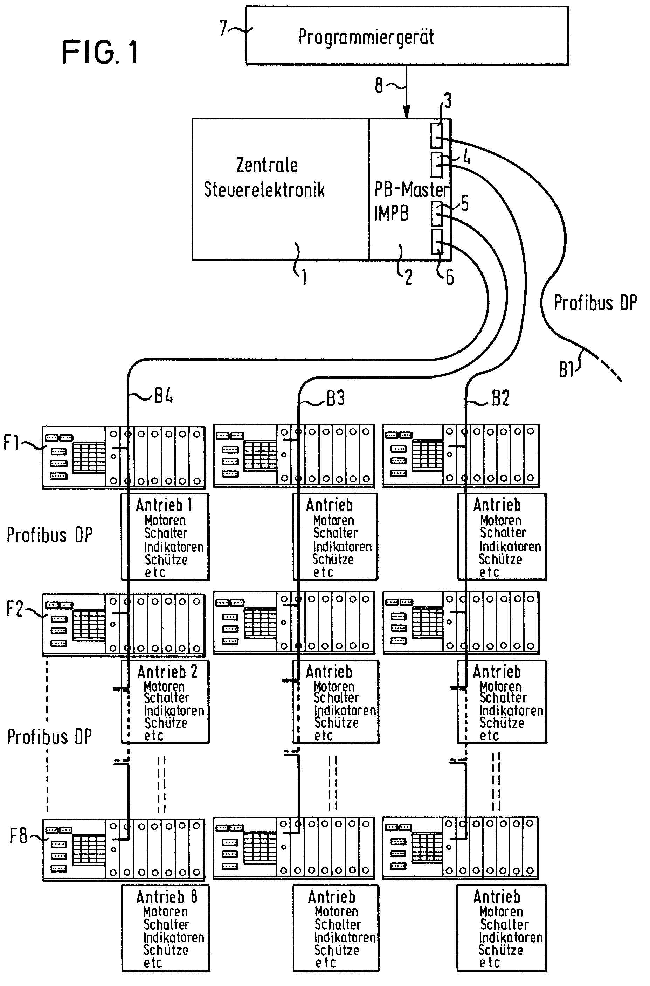

Die Figur 1 zeigt ein Ausführungsbeispiel eines Feldbus-Systemaufbaus. Hier handelt es sich um den Profibus DP, was jedoch nicht als Einschränkung zu betrachten ist. Auch andere Feldbussysteme können zum Einsatz kommen.

Kern des Systemaufbaus ist die zentrale Steuerelektronik 1, die mit einem Rangierverteiler 2 nach der Erfindung verbunden ist. Der Rangierverteiler 2 enthält im vorliegenden Fall vier CP5480 Schnittstellen 3, 4, 5 und 6 für den Profibus DP, von denen jeweils eine Busleitung B1, B2, B3 und B4 abgeht. Mit der Busleitung B4 sind z. B. acht Funktionsgruppen F1, F2, ..., F8 verbunden, an die jeweils Sensoren und Aktoren (Motoren, Schalter, Indikatoren, Schütze, LTC) angeschlossen werden können. Entsprechendes gilt für die Busleitungen B3, B2 und B1.

Natürlich können die Anzahl der Busleitungen und die Anzahl der Funktionsgruppen pro Busleitung auch abweichend hiervon gewählt werden.

Mit dem Rangierverteiler 2 kann noch ein Programmiergerät 7 zur Eingabe von Information in einen Informationsspeicher verbunden werden, wie nachfolgend erläutert wird. Diese Information gelangt über eine Leitung 8 in den Informationsspeicher, der sich z. B. innerhalb des Software-Rangierverteilers 2 befinden kann. Dabei kann die Information über das Programmiergerät 7 auch manuell eingegeben werden. Nach der Informatlonsübertragung vom Programmiergerät 7 in den Speicher des Rangierverteilers 2 kann die Verbindung über die Leitung 8 wieder gelöst werden.

Über die genannten Busleitungen B1 - B4 werden Datenwörter seriell übertragen, die im vorliegenden Ausführungsbeispieljeweils acht Bit umfassen sollen. Die Übertragung von n x 8 Bit breiten Datenwörtern ist ebenso möglich. Dabei kann es sich um Datenwörter handeln, die von einer der Funktionsgruppen zur zentralen Steuerelektronik 1 gesendet werden, oder um solche, die von der zentralen Steuerelektronik 1 für eine der Funktionsgruppen vorgesehen sind.

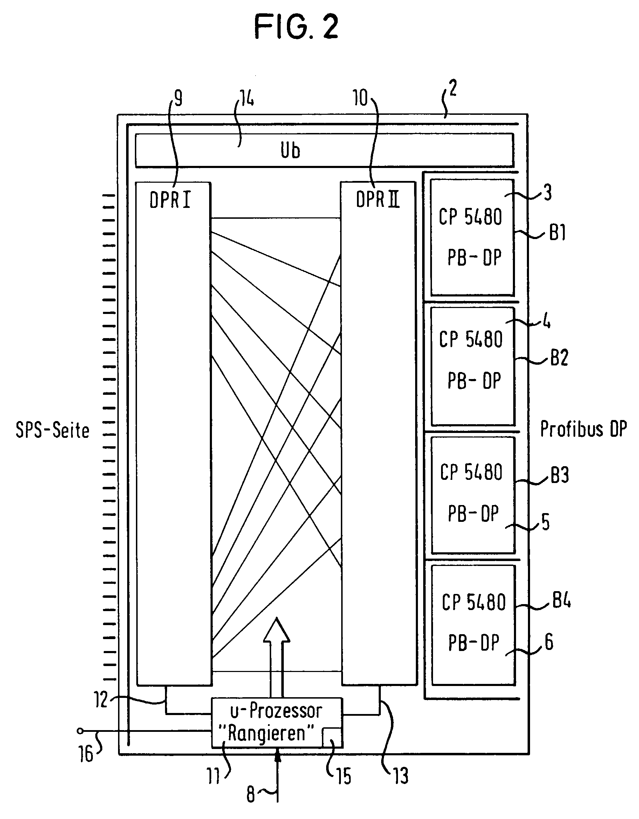

Die Figur 2 zeigt den inneren Aufbau des Rangierverteilers nach der Erfindung.

Er enthält die bereits erwähnten vier CP5480 Schnittstellen 3 bis 6 für den Profibus DP, wobei jeweils eine der Schnittstellen 3 bis 6 ausgangsseitig mit einer der Busleitungen B1 - B4 verbunden ist. Weiterhin befinden sich im Rangierverteiler 2 ein erster Speicher 9 (DPR I) und ein zweiter Speicher 10 (DPR II), die als Dualport-RAMS ausgebildet sind. Dabei sind der erste Speicher 9 und der zweite Speicher 10 über einen Rangierprozessor 11 miteinander verbunden. Hierzu sind entsprechende Leitungsverbindungen 12 und 13 vorgesehen. Der erste Speicher 9 ist ferner an seiner zur zentralen Steuerelektronik 1 liegenden Seite mit dem genannten Adressraum der zentralen Steuerelektronik 1 verbunden, wie noch ausgeführt wird, während der zweite Speicher 10 an seiner zu den Busleitungen liegenden Seite mit den genannten Schnittstellen 3 bis 6 verbunden ist. Eine Versorgungsschaltung 14 dient zur galvanisch getrennten Spannungsversorgung sämtlicher Einheiten des Software-Rangierverteilers 2, während der Rangierprozessor 11 zusätzlich noch einen dritten Speicher 15 aufweist, in welchen der Rangierprozessor 11 die über die Leitung 8 erhaltene Information speichert. Über einen Anschluß 16 steht der Rangierprozessor 11 mit einer zentralen Prozessoreinheit in Verbindung, die sich innerhalb der zentralen Steuerelektronik 1 befindet, wie ebenfalls noch erläutert wird, so daß auch die zentrale Prozessoreinheit auf die im dritten Speicher 15 gespeicherten Daten zugreifen kann.

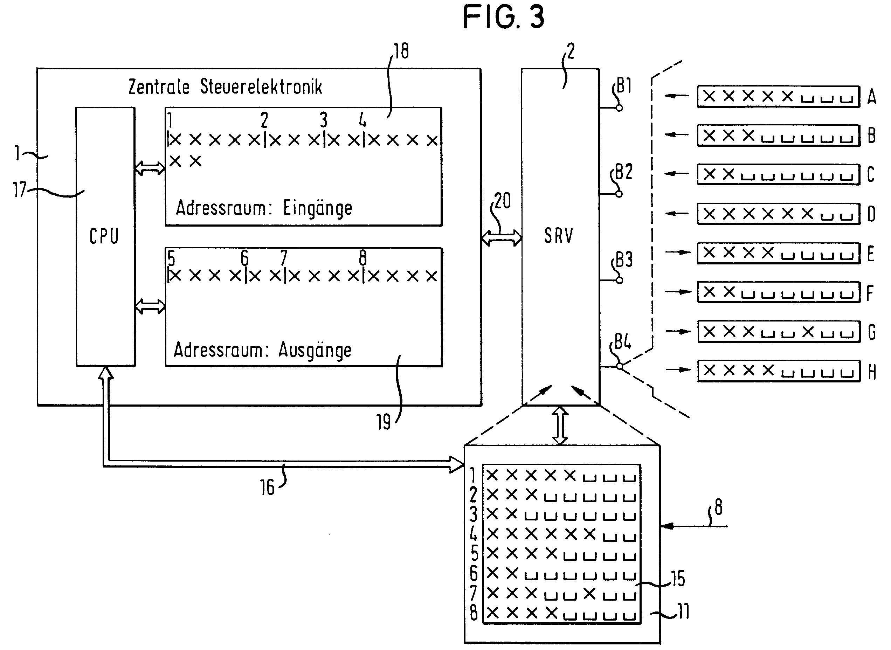

Ein den genaueren Aufbau erläuterndes Blockschaltbild zeigt die Figur 3.

Gemäß diesem Blockschaltbild weist die zentrale Steuerelektronik 1 eine zentrale Prozessoreinheit 17 (CPU) auf, die mit einem Eingangsadressraum 18 sowie mit einem Ausgangsadressraum 19 verbunden ist bzw. kommuniziert. Über eine Leitungsverbindung 20 stehen die zentrale Steuerelektronik 1 und der Software-Rangierverteiler 2 in Verbindung, um Daten aus dem ersten Speicher 9 des Software-Rangierverteilers 2 in den Eingangsadressraum 18 oder Daten aus dem Ausgangsadressraum 19 in den ersten Speicher 9 des Software-Rangierverteilers 2 übertragen zu können. Die zentrale Prozessoreinheit 17 kommuniziert darüber hinaus über die Leitungsverbindung 16 mit dem Rangierprozessor 11, um Zugriff auf die im dritten Speicher 15 des Rangierprozessors 11 gespeicherte Information zu haben. In Figur 3 sind der Rangierprozessor 11 sowie der dritte Speicher 15 der Übersicht wegen außerhalb des Software-Rangierverteilers 2 dargestellt.

Im folgenden wird die Betriebsweise des Systemaufbaus im einzelnen beschrieben.

Hierbei sei angenommen, daß über die Busleitungen B1 bis B4 eine serielle Übertragung von Datenwörtern erfolgt, die jeweils acht Bit umfassen, die für Nutzinformation vorgesehen werden können. Die Datenwörter A, B, C und D sollen dabei von den Funktionsgruppen F1, F2, F3 und F4 zur zentralen Steuerelektronik 1 gesendet werden, während andererseits die Datenwörter E, F, G und H von der zentralen Steuerelektronik 1 zu den Funktionsgruppen F5, F6, F7 und F8 übertragen werden sollen. Das von der Funktionsgruppe F1 kommende Datenwort A umfaßt fünf aktive Bits, nämlich die ersten fünf, da mit der Funktionsgruppe F1 z. B. nur fünf Sensoren verbunden sind. Entsprechendes gilt für die anderen Datenwörter B - D für die Funktionsgruppen F2 - F4.

Dagegen sendet die zentrale Steuerelektronik 1 mit dem Datenwort G z. B. vier aktive Bits zur Funktionsgruppe F7, nämlich das erste, zweite, dritte und sechste. Entsprechend ist diese Funktionsgruppe F7 mit vier Aktoren beschaltet.

Werden nun die Datenwörter A - D über die Busleitung B4 nacheinander zur zentralen Steuerelektronik 1 gesendet, so gelangen sie aufeinanderfolgend über die Schnittstelle 6 in den zweiten Speicher 10 und werden mit Hilfe des Software-Rangierers 11 so umgruppiert und im ersten Speicher 9 abgelegt, daß sich nur die aktiven Bits der jeweiligen Datenwörter A - D im ersten Speicher 9 befinden, und zwar unmittelbar aufeinanderfolgend, ohne daß zwischen ihnen noch passive Bits liegen. Diese Datenserte wird dann über die Leitung 20 in den Eingangsadressraum 18 übertragen, wie in Figur 3 zu erkennen ist. Dabei werden die jeweiligen aktiven Bits der Datenwörter A, B, C und D unter den Adressen 1, 2, 3 und 4 abgelegt.

Um zu erkennen, welche der Bits eines Datenworts A - D aktive Bits sind, greift der Software-Rangierverteiler 2 auf die im dritten Speicher 15 abgelegte Information zu. Hier erkennt er unter der Adresse 1 für das erste Datenwort A, daß dieses fünf aktive Bits aufweist, nämlich die ersten fünf, und drei passive Bits, nämlich die letzten drei. Unter der Adresse 2 des dritten Speichers 15 befindet sich die entsprechende Information für das Datenwort B, usw. Bei nacheinander eingehenden Datenwörtern A - D wird also sequentiell auf die Adressen 1 bis 4 im Speicher 15 zurückgegriffen, um die Entscheidung über aktive und passive Bits zu treffen.

Erzeugt dagegen die zentrale Prozessoreinheit 17 Datenwörter, die zu den Funktionsgruppen F5, F6, F7 und F8 gesendet werden, also z. B. die Datenwörter E, F, G und H, so werden diese zunächst nach Erzeugung durch die CPU 17 im Ausgangsadressraum 19 unter den Adressen 5 bis 8 abgelegt, und zwar, wie bereits zuvor beschrieben, ebenfalls unter Bezugnahme auf die im Speicher 15 gespeicherte Information, die sich jetzt allerdings unter den Adressen 5 bis 8 befindet, die diesen Datenwörtern E - H zugeordnet ist. Unter der Adresse 5 für das Datenwort E sind z. B. die ersten vier Bits als aktiv bezeichnet, weil die Funktionsgruppe F5 nur an ihren ersten vier Anschlüssen mit Aktoren verbunden ist, die Signale empfangen bzw. ausführen können. Bei der Funktionsgruppe F7 sind z. B. von den möglichen sechs Anschlüssen der Funktionsgruppe ebenfalls nur vier mit Aktoren verbunden, jetzt aber der erste, zweite, dritte und sechste.

Entsprechend ist die Information unter der Adresse 7 im Speicher 15 gespeichert. Dennoch legt die CPU 17 zunächst z. B. die aktiven Bits für das Datenwort G (das an die Station F7 geschickt wird) hintereinander ab, und zwar unter der Adresse 7 im Ausgangsadressraum 19.

Sollen jetzt die Datenwörter tatsächlich über die Bitleitung B4 zu den Funktionsgruppen F5 - F8 geschickt werden, so gelangen die aktiven Bits aus den Adressen 5 bis 8 des Ausgangsadressraums 19 nacheinander über die Leitung 20 in den ersten Speicher 9 des Software-Rangierverteilers 2. Der Software-Rangierverteiler 2 greift dann mit jeder neuen Adresse auf die entsprechenden Adressen 5 bis 8 im dritten Speicher 15 zurück, um die jeweiligen Datenwörter E - H bezüglich der passenden Bits zu ergänzen. Hierbei können passive Bits auch zwischen aktiven Bits eingefügt werden, wie dies z. B. beim Datenwort G der Fall ist. Die jeweils um die passiven Bits ergänzten Datenwörter werden dann im zweiten Speicher 10 zwischengespeichert und anschließend seriell über die Schnittstelle 6 zur Datenleitung B4 übertragen.

Es sei noch darauf hingewiesen, daß den entsprechenden Datenwörtern A - H natürlich noch weitere vorangehende Information zugeordnet ist, die z. B. die Nummer einer Funktionsgruppe enthält, usw. Dies ist jedoch allgemein bekannt und soll hier nicht weiter erläutert werden.

## Patentansprüche

1. Verfahren zur seriellen Übertragung von Daten zwischen einer einen Adressraum (18, 19) aufweisenden zentralen Steuerelektronik (1) und dezentralen Funktionsgruppen (F1, ..., F8) mittels einer die Funktionsgruppen (F1, ..., F8) verbindenden Busleitung (B4), über die Datenwörter (A - H) gesendet werden und jeweils ein Datenwort (A - H) einer der Funktionsgruppen (F1, ..., F8) zugeordnet ist,
**dadurch gekennzeichnet,** daß
- für jede Funktionsgruppe (F1, ..., F8) Information über aktive (X) und passive ( 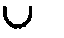 ) Bits pro Datenwort (A - H) gespeichert wird,
- unter Verwendung dieser Information nur die aktiven Bits (X) pro Datenwort (A - H) gelesen und
- diese so im Adressraum (18, 19) gespeichert werden, daß zwischen den aktiven Bits (X) benachbarter Datenwörter keine freien Speicherplätze mehr verbleiben.

2. Verfahren nach Anspruch 1, **dadurch gekennzeichnet,** daß in einen Adressraum (18) für Eingänge die aktiven Bits (X) derjenigen Datenwörter (A - D) gespeichert werden, die von den Funktionsgruppen (F1 - F4) über die Busleitung (B4) zur zentralen Steuerelektronik (1) gesendet werden.

3. Verfahren nach Anspruch 1, **dadurch gekennzeichnet,** daß in einem Adressraum (19) für Ausgänge die aktiven Bits (X) derjenigen Datenwörter (E- H) gespeichert werden, die von der zentralen Steuerelektronik (1) über die Busleitung (B4) zu den Funktonsgruppen (F5, ..., F8) gesendet werden.

4. Verfahren nach Anspruch 3, **dadurch gekennzeichnet,** daß die aktiven Bits (X) beim Aussenden aus dem Adressraum (19) für Ausgänge um die zugehörigen passiven Bits ( 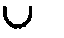 ) für das jeweilige Datenwort (E - H) ergänzt werden, und zwar unter Verwendung der für jede Funktionsgruppe gespeicherten Information über aktive (X) und passive ( 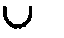 ) Bits.

5. Verfahren nach einem der Ansprüche 1 bis 4, **dadurch gekennzeichnet,** daß zu unterschiedlichen Datenwörtern gehörende und vorbestimmte der gespeicherten aktiven Bits (X) unter Wahrung ihrer Funktionsgruppenzugehörigkeit (Stationsadressierung) im Adressraum (18, 19) der zentralen Steuerelektronik ohne Einschränkungen einzeln bzw. in Gruppen zusammengefaßt ablegbar sind.

6. Verfahren nach einem der Ansprüche 1 bis 5, **dadurch gekennzeichnet,** daß die Datenwörter (A - H) jeweils 1 Byte umfassen.

7. Verfahren nach einem der Ansprüche 1 bis 5, **dadurch gekennzeichnet,** daß die Datenwörter (A - H) jeweils mehrere Bytes umfassen.

8. Vorrichtung zur seriellen Übertragung von Daten zwischen einer einen Adressraum (18, 19) aufweisenden zentralen Steuerelektronik (1) und dezentralen Funktionsgruppen (F1, .., F8) mittels einer die Funktionsgruppen (F1, ..., F8) verbindenden Busleitung (B4), über die Datenwörter (A - H) gesendet werden und jeweils ein Datenwort (A - H) einer der Funktionsgruppen (F1, ..., F8) zugeordnet ist,
**dadurch gekennzeichnet,** daß die Busleitung (B4) mit der zentralen Steuerelektronik (1) über einen Rangierverteiler (2) zur datengesteuerten Umgruppierung von Ein- und Ausgangsdaten verbunden ist.

9. Vorrichtung nach Anspruch 8, **dadurch gekennzeichnet,** daß der Software-Rangierverteiler (2) einen an der Adressraumseite liegenden ersten Speicher (9), einen an der Busleitungsseite liegenden zweiten Speicher (10) sowie einen Rangierprozessor (11) zur Datenumgruppierung aufweist.

10. Vorrichtung nach Anspruch 9, **dadurch gekennzeichnet,** daß der Rangierprozessor (11) mit einem dritten Speicher (15) verbunden ist, in welchem auf jede der Funktionsgruppen (F1, ..., F8) bezogene Information über aktive (X) und passive ( 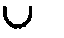 ) Bits pro Datenwort (A - H) gespeichert ist.

11. Vorrichtung nach Anspruch 10, **dadurch gekennzeichnet,** daß eine zentrale Prozessoreinheit (17) der zentralen Steuerelektronik (1) mit dem dritten Speicher (15) verbunden ist.

12. Vorrichtung nach Anspruch 10 oder 11, **dadurch gekennzeichnet,** daß der dritte Speicher (15) mit einem Programmiergerät (7) zur Eingabe der Information verbunden werden kann.

13. Vorrichtung nach einem der Ansprüche 10 bis 12, **dadurch gekennzeichnet,** daß der erste Speicher (10) sowohl mit der Eingangsseite eines Adressraums "Eingänge" als auch mit der Ausgangsseite eines Adressraums "Ausgänge" des Adressraums der zentralen Steuerelektronik (1) verbunden ist.
